# EUROPÄISCHE PATENTANMELDUNG

(11) **EP 1 443 000 A2**
(43) Veröffentlichungstag der Anmeldung: **04.08.2004**
(21) Anmeldenummer: 04000285.9
(22) Anmeldetag: 09.01.2004
(51) Int. Cl.: B65D 90/34, B65D 90/10

(54) **Deckel für den Dom eines ortsbeweglichen Kraftstofftanks**

(30) Priorität: 28.01.2003 DE 20301263 U
(71) Anmelder: ALFONS HAAR Maschinenbau GmbH & Co., D-22547 Hamburg (DE)
(72) Erfinder: Haar, Thomas, 25469 Halstenbek (DE)
(74) Vertreter: Patentanwälte Hauck, Graalfs, Wehnert, Döring, Siemons, Schildberg

(57) **Zusammenfassung**

Deckel für den Dom eines ortsbeweglichen Kraftstofftanks mit den folgenden Merkmalen:
- eine verschließbaren Einfüllöffnung
- ein Überdruckventil
- ein Gaspendelventil, das auf der Tankinnenseite einen Stutzen aufweist, der mittels eines separaten lösbar anbringbaren ersten Verschlusselements dicht verschließbar ist, wobei am Stutzen oder am Deckel ein Parkmittel vorgesehen ist zur sicheren Aufnahme des ersten Verschlusselements
- ein Druckentlastungsventil mit einem im Deckel angebrachten Stutzen, der mittels eines zweiten Verschlusselements in einer ersten Position dicht verschließbar ist, wobei das zweite Verschlusselement so ausgebildet ist, das es in einer zweiten Position den Stutzen mit Atmosphäre verbindet und Schutzfunktion hat und
- ein Vakuumventil, das öffnet, wenn der Unterdruck im Tank einen vorgegebenen Wert erreicht.

## Beschreibung

Die Erfindung bezieht sich auf einen Deckel für den Dom eines ortsbeweglichen Kraftstofftanks nach dem Anspruch 1. Die Erfindung bezieht sich insbesondere auf Tankkraftfahrzeuge bzw. Tankcontainer.

Ortsbewegliche Kraftstofftanks unterliegen beim Betrieb an Land bestimmten mit ADR bezeichneten Vorschriften. Werden derartige Kraftstofftanks auf See befördert, kommen andere Vorschriften zum Zuge entsprechend dem IMDG-Code (International Maritime Dangerous Goods Code). Aus Gründen der Feuersicherheit und Explosionsgefahr muss z.B. verhindert werden, dass über Öffnungen Kraftstoff bzw. Kraftstoffgase entweichen können. Wird daher ein Kraftstofftank von Land auf ein Schiff gebracht zum Transport über Wasser, dann ist es bisher Stand der Technik, dass eingebaute Armaturen, die gemäß der ADR betrieben werden und die sich normalerweise in einem Deckel im Dom des Kraftstofftanks befinden, ausgebaut und die Öffnungen in einen Zustand gebracht werden, dass den Sicherheitsvorschriften auf See Rechnung getragen ist. Der Umbau ist aufwändig und birgt die Gefahr, dass bei einem Rückbau, der ebenfalls aufwändig ist, nicht mehr alle Teile für einen ordnungs- und bestimmungsgemäßen Betrieb zur Verfügung stehen. Außerdem besteht die Gefahr, dass beim Rückbau fehlerhaft vorgegangen wird, wodurch der Betrieb des Tanks nicht mehr ordnungsgemäß gewährleistet ist. Auch die Sicherheit kann durch fehlerhaften Rückbau beeinträchtigt werden. Ist der Rückbau nicht vorschriftsmäßig vorgenommen und fehlt es an einer Öffnung im Domdeckel, kann geschehen, dass der Tank beim Absaugen von Kraftstoff kollabiert. Dadurch wird der gesamte Tank unbrauchbar.

Der Erfindung liegt daher die Aufgabe zugrunde, einen Deckel für den Dom eines ortsbeweglichen Kraftstofftanks zu schaffen, bei dem die Umstellung vom Landzum Seebetrieb und umgekehrt mit geringstmöglichem Aufwand erfolgt, ohne dass die Sicherheit beeinträchtigt ist.

Diese Aufgabe wird durch die Merkmale des Patentanspruchs 1 gelöst.

Der Deckel nach der Erfindung, der üblicherweise am Dom des Kraftstofftanks angeschraubt ist, weist eine verschließbare Einfüllöffnung auf, die beispielsweise einen Deckel im Deckel beinhaltet. Dies ist jedoch allgemein bekannt. Der erfindungsgemäße Deckel enthält auch ein Überdruckventil, das dafür sorgt, dass bei ansonsten verschlossenen Öffnungen im Deckel bei einem bestimmten Überdruck im Tank eine Entlastung stattfindet. Auch dieses Konstruktionsmerkmal ist generell bekannt. Es ist auch üblich, in Deckeln für Kraftstofftanks ein so genanntes Gaspendelventil vorzusehen, über das eine weitere Verbindung mit einem anderen Tank stattfindet, zwischen denen ein Kraftstofftransport stattfindet. Die weitere Leitung ermöglicht den Ausgleich des Gases beim Leeren bzw. Befüllen der Tanks. Erfindungsgemäß weist das Gaspendelventil, das üblicherweise pneumatisch geöffnet wird, auf der Tankinnenseite einen Stutzen auf, der mittels eines separaten lösbar anbringbaren Verschlusselements dicht verschließbar ist. Ein Ausbau ist nicht notwendig. Außerdem ist im Tank, vorzugsweise in der Nähe des Deckels bzw. an diesem angebracht, ein Parkmittel vorgesehen zur sicheren Aufnahme des ersten Verschlusselements. Wird daher eine Umrüstung von ADR- zum IMDG-Betrieb notwendig, dann wird mit Hilfe des ersten Verschlusselements das Gaspendelventil gesperrt. Vorher befand sich das erste Verschlusselement in einer sicheren Parkposition, aus der es von einer Bedienungsperson ohne weiteres entnommen und auf den Stutzen gebracht werden kann.

Bei der Erfindung weist der Deckel auch ein Druckentlastungsventil auf, wie es an sich bekannt ist. Es öffnet in beiden Richtungen, d.h. bei einem Über- und einem Unterdruck im Tank stellt es eine Verbindung mit Atmosphäre her. Erfindungsgemäß ist ein zweites Verschlusselement vorgesehen, das in zwei unterschiedlichen Positionen am Stutzen des Druckentlastungsventils anbringbar ist. In der einen Position wird eine Verbindung des Stutzens mit Atmosphäre hergestellt und in der anderen der Stutzen dicht abgeschlossen. Bei der Umrüstung von dem einen zum anderen Betrieb braucht die Bedienungsperson daher nur das zweite Verschlusselement zu lösen und es in der anderen Position wieder anzubringen. Ein Ausbau ist nicht notwendig.

Schließlich ist bei der Erfindung im Deckel ein für den Seebetrieb vorgeschriebenes Vakuumventil vorgesehen, das die Aufgabe hat, bei einem Unterdruck im Tank einen Ausgleich herzustellen. Selbst wenn bei der Umrüstung vom IMDG auf den ADR-Betrieb vergessen werden sollte, die Verschlusselemente zu entfernen bzw. umzukehren, würde der Tank beim Leeren nicht kollabieren, weil das Vakuumventil ausreicht, den Tank ausreichend zu belüften, wenn ein Unterdruck aufgebaut wird.

Die apparativen Vorkehrungen, die beim erfindungsgemäßen Deckel für die Umrüstung vom ADR auf IMDG-Betrieb und umgekehrt aufgewendet werden, sind vom Umfang her vernachlässigbar. Die Vorteile, die mit dem erfindungsgemäßen Deckel erreicht werden, sind hingegen außerordentlich hoch. Es können keine Teile verloren gehen. Die Umrüstung von dem einen in den anderen Betrieb ist praktisch fehlersicher. Selbst wenn diese Umrüstung vergessen werden sollte, können Beeinträchtigungen nicht zu Schäden führen. Da ein Entfernen von Sicherheitsarmaturen nicht notwendig ist, kann keine Beeinträchtigung der Sicherheit beim Wiedereinbau der Armaturen erfolgen.

Nach einer Ausgestaltung der Erfindung weist das erste Verschlusselement einen Gewindeabschnitt auf, mit dem es auf den Stutzen des Gaspendelventils aufgebracht werden kann. Vorzugsweise ist das erste Verschlusselement ein Schraubdeckel, der auf ein Außengewinde des Stutzens schraubbar ist.

Ist das erste Verschlusselement mit einem Gewindeabschnitt versehen, ist es zweckmäßig, das Parkmittel mit einem komplementären Gewindeabschnitt zu versehen, damit das Verschlusselement durch Aufschrauben auf den Gewindeabschnitt gehalten werden kann. Ist das Verschlusselement ein Schraubdeckel, ist das Parkmittel vorzugsweise ein Außengewindeabschnitt, auf den der Deckel aufgeschraubt wird. Der Außengewindeabschnitt kann zum Beispiel über einen geeigneten Blechabschnitt mit der Unterseite des Deckels verbunden werden.

Das Druckentlastungsventil weist nach einer Ausgestaltung der Erfindung einen über die Deckeloberseite überstehenden Stutzen auf, auf den das zweite Verschlusselement aufschraubbar ist. Das zweite Verschlusselement ist nach einer anderen Ausgestaltung der Erfindung ein annähernd zylindrisches Bauteil mit zwei Innengewindeabschnitten in den Endbereichen und einer Trennwand zwischen den Innengewindeabschnitten, wobei die Wandung des zylindrischen Bauteils auf einer Seite der Trennwand Öffnungen aufweist.

Nach einer weiteren Ausgestaltung der Erfindung ist eine weitere Öffnung im Deckel vorgesehen, die durch eine Kappe aus Edelstahl verschlossen ist. Die Kappe ist gleichzeitig das Gehäuse des erforderlichen Überfüllventils und kann mit Hilfe einer geeigneten Schraubbefestigung an der Oberseite des Deckels befestigt werden. Die Kappe hält an der Unterseite den an sich erforderlichen Überfüllsensor, der zum Beispiel optisch-elektronisch betrieben wird. Durch diesen Einbau des Überfüllsensors ist ein Umrüsten von ADR- and den IMDG-Betrieb und umgekehrt nicht erforderlich. Da die Kappe aus Edelstahl besteht und als Gehäuse ausgelegt ist, ist der Überfüllsensor ausreichend geschützt und muss nicht ausgebaut werden, wie das im Stand der Technik der Fall ist.

Die Erfindung wird nachfolgend anhand eines in Zeichnungen dargestellten Ausfiihrungsbeispiels näher erläutert.
- Fig. 1: zeigt die Draufsicht auf einen Deckel nach der Erfindung.
- Fig. 2: zeigt einen Schnitt durch den Deckel nach Fig. 1 entlang der Linie 2-2.
- Fig. 3: zeigt halb im Schnitt, halb in Seitenansicht ein Verschlusselement für den Deckel nach Fig. 1 oder 2.
- Fig. 4: zeigt die Draufsicht auf ein Gaspendelventil des Deckels nach Fig. 1.
- Fig. 5: zeigt einen Schnitt durch die Darstellung nach Fig. 4 entlang der Linie 5-5.

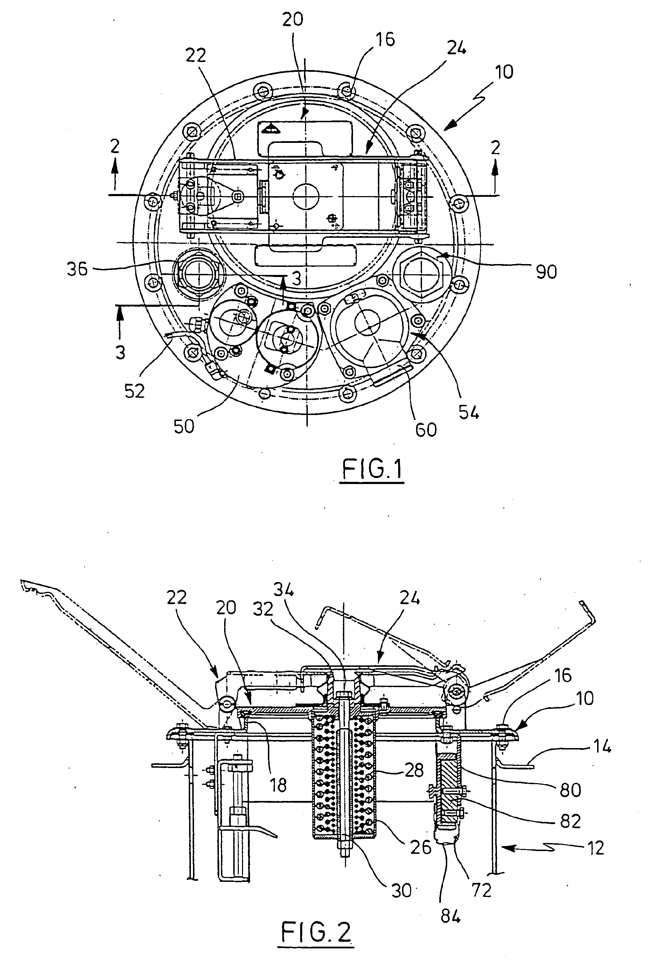

In Fig. 1 ist ein Deckel 10 für den Verschluss eines Doms 12 (Fig. 2) eines sonst nicht dargestellten Kraftstofftanks gezeigt. Die Oberseite des Kraftstofftanks ist bei 14 in Fig. 2 angedeutet. Der Deckel 10 ist mit einer Reihe von Schrauben 16 am Dom 12 angeschraubt. Der Deckel 10 weist eine außermittige Öffnung 18 auf, welche durch einen weiteren Deckel 20 dichtend verschließbar ist. Zu Verschlusszwecken ist auf dem Deckel 10 ein erster Hebel 22 angelenkt, der in durchgezogenen Linien in geschlossener Stellung und in gestrichelten Linien in offener Stellung gezeigt ist. Auf der gegenüberliegenden Seite zum Hebel 22 ist ein weiterer Hebel 24 am Deckel 10 angelenkt, der in gestrichelten Linien in zwei verschiedenen offenen Stellungen dargestellt ist. Ein Federgehäuse 26 ist an der Unterseite des Deckels 20 angebracht und enthält mehrere Federn 28, die sich an der Unterseite des Deckels 20 abstützen. Eine Stange 30 innerhalb des Federgehäuses 28 ist gleitend durch den Deckel 20 hindurchgeführt in einen hohlen zylindrischen Abschnitt 32, wobei ein Schraubenkopf 34 auf der Stange angeordnet ist. Wird der Deckel 20 von unten mit Druck beaufschlagt, hebt sich der Deckel 20 unter Überwindung der Federn 28 nach oben, denn der zylindrische Abschnitt 32 mit dem Widerlager der Feder kann wegen der Hebel 22, 24 nicht die Bewegung nach oben mitmachen. Auf diese Weise ist ein Überdruckventil geschaffen.

Die Hebel 22, 24 bilden eine Verriegelung für den Deckel 22. Hierauf soll jedoch im Einzelnen nicht eingegangen werden.

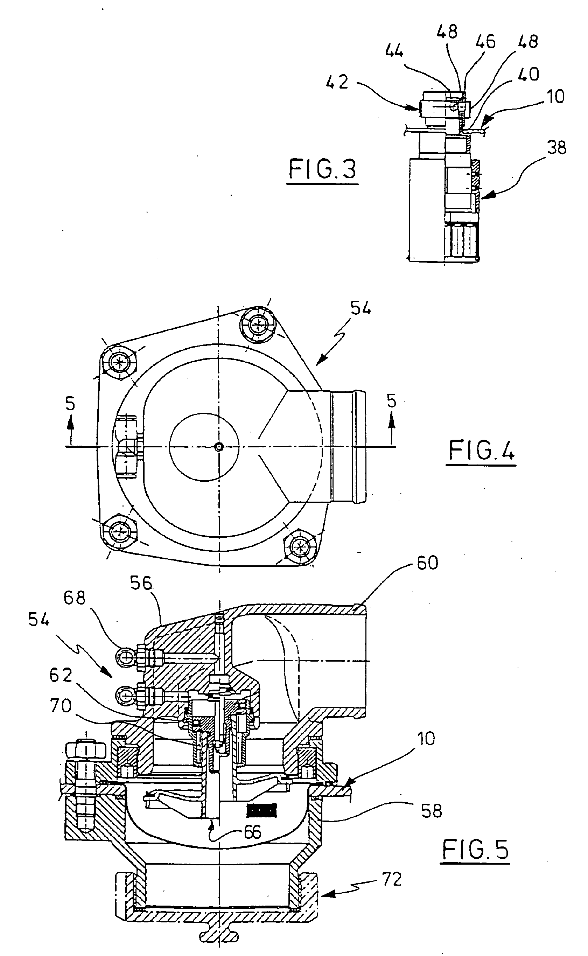

Bei 36 ist in Fig. 1 ein Verschlusselement zu erkennen, das in Fig. 3 näher dargestellt ist. In Fig. 3 ist der Deckel bei 10 angedeutet. An der Unterseite des Deckels 10 ist ein Entlastungsventil 38 angebracht, das im Einzelnen nicht beschrieben werden soll. Es ist von bekanntem Aufbau und bekannter Wirkungsweise. Das Gehäuse des Entlastungsventils 38 ragt mit einem Gewindestutzen 40 über die Oberseite des Deckels 10 über. Auf den Gewindestutzen ist ein zylindrisches Bauteil 42 aufgeschraubt. Es enthält eine Trennwand 44, durch welche der Durchgang durch das ansonsten hohle Bauteil 42 gesperrt ist. Unterhalb der Trennwand befinden sich Öffnungen 46 in der zylindrischen Wand, die durch eine umlaufende Schürze 48 abgedeckt sind. Über die Öffnungen 46 kann Luft in den Tank eintreten oder aus dem Tank entweichen, je nach den im Tank herrschenden Druckverhältnissen. Der obere Teil des Bauteils 42 weist ebenfalls ein Innengewinde 48 auf, mit dem das Bauteil 42 auf den Stutzten 40 aufgeschraubt werden kann. In diesem Fall ist jegliche Verbindung zwischen Atmosphäre und Tank gesperrt.

In Fig. 1 ist mit 50 eine Kappe aus Edelstahl bezeichnet, die auf den Deckel 10 aufgeschraubt ist und welche gleichzeitig Gehäuse eines Füllstandssensor bzw. einen Überfüllsensor ist. Der nicht gezeigte Überfüllsensor ist durch die Kappe 50 gegenüber äußeren Einwirkungen gesichert. Mit 52 ist eine Leitung angedeutet, die mit dem Überfüllsensor in Verbindung steht.

Auf dem Deckel 10 ist ferner ein Gaspendelventil 54 angeordnet, das näher in den Figuren 4 und 5 dargestellt ist.

Das Ventilgehäuse des Gaspendelventils 54 besteht aus einem oberen Teil 56 und einem unteren Teil 58, die durch Schraubverbindung gegen die Oberseite bzw. die Unterseite des Deckels 10 geschraubt sind. Das obere Teil 56 weist einen seitlich abgehenden Stutzen 60 für einen Gaspendelschlauch auf. Außerdem enthält es einen Zylinder 62 für einen Kolben 64, mit dem ein Ventilelement 66 verbunden ist. Der Zylinderraum ist im oberen Bereich mit einem Pneumatikanschluss 68 verbunden. Wird mithin Druck im Zylinder aufgebaut, bewegt sich der Kolben 64 in die in der linken Darstellung gezeigte untere Position gegendie Wirkung einer Feder 70. Dadurch ist das Gaspendelventil geöffnet.

Das untere Teil 58 ist als Stutzen mit Außengewinde ausgebildet, auf den ein Deckel 72 dichtend aufgeschraubt werden kann. In diesem Fall ist der Durchgang durch das Gaspendelventil 54 unabhängig von einer Nichtbetätigung oder Betätigung abgesperrt.

In Fig. 2 ist gezeigt, dass an einem Blech 80, das gegen die Unterseite des Deckels 10 geschraubt ist, nahe der Öffnung 18 ein zylindrisches Bauteil 82 angebracht mit einem Außengewinde. Dieses ist so bemessen, dass der Deckel 72 auf das Bauteil 58 aufgeschraubt werden kann. In dieser Position befindet sich der Deckel 72 in einer Parkstellung. Der Deckel 72 ist mittels einer Kette 84 an dem Blech 80 angebunden, sodass er nicht in den Tank fallen kann, wenn er von einer Bedienungsperson gelöst wird, um am Stutzen 58 angeschraubt zu werden.

Schließlich ist am Deckel 10 ein Vakuumventil 90 angebracht, das ab einem gewissen Unterdruck öffnet, damit im Tank kein zu großes Vakuum entsteht. Das Vakuumventil 90 verhindert, dass beim Leeren des Tanks ein zu großer Unterdruck im Tank entsteht, der zu einem Kollaps des Tanks führen könnte. Ein Unterdruck könnte z. B. entstehen, wenn von der Umrüstung vom IMDG auf den ADR-Betrieb vergessen wird, den Deckel 72 zu entfernen und das Bauteil 42 wieder in die Durchlassposition zu bringen.

Im ADR- bzw. Landbetrieb ist der Deckel 72 in der Parkposition gemäß Fig. 2 und das Verschlusselement 42 in der Position wie in Fig. 3 angedeutet. Für den IMDG-Betrieb ist der Deckel 72 aufzuschrauben, wie in Fig. 5 angedeutet und das Verschlusselement 42 um 180° gedreht auf den Stutzen 40 aufzuschrauben, um den Durchgang zu sperren. Weitere Maßnahmen sind nicht erforderlich.

## Patentansprüche

1. Deckel für den Dom eines ortsbeweglichen Kraftstofftanks mit den folgenden Merkmalen:
- eine verschließbaren Einfüllöfnung (18)
- ein Überdruckventil
- ein Gaspendelventil (54), das auf der Tankinnenseite einen Stutzen (58) aufweist, der mittels eines separaten lösbar anbringbaren ersten Verschlusselements dicht verschließbar ist, wobei am Stutzen oder am Deckel ein Parkmittel vorgesehen ist zur sicheren Aufnahme des ersten Verschlusselements
- ein Druckentlastungsventil (38) mit einem im Deckel (10) angebrachten Stutzen (40), der mittels eines zweiten Verschlusselements in einer ersten Position dicht verschließbar ist, wobei das zweite Verschlusselement so ausgebildet ist, das es in einer zweiten Position den Stutzen (40) mit Atmosphäre verbindet und Schutzfunktion hat und
- ein Vakuumventil (90), das öffnet, wenn der Unterdruck im Tank einen vorgegebenen Wert erreicht.

2. Deckel nach Anspruch 1, **dadurch gekennzeichnet, dass** das Überdruckventil von einem Deckel (20) der Öffnung (18) gebildet ist, der gegen Federkraft anhebbar ist.

3. Deckel nach Anspruch 1 oder 2, **dadurch gekennzeichnet, dass** der Stutzen (58) des Gaspendelventils (54) einen Gewindeabschnitt aufweist und das erste Verschlusselement auf den Gewindeabschnitt aufschraubbar ist.

4. Deckel nach Anspruch 3, **dadurch gekennzeichnet, dass** das erste Verschlusselement ein Schraubdeckel (72) ist, der auf ein Außengewinde des Stutzens (58) schraubbar ist.

5. Deckel nach einem der Ansprüche 2 bis 4, **dadurch gekennzeichnet, dass** das Parkmittel einen Gewindeabschnitt aufweist.

6. Deckel nach Anspruch 4 und 5, **dadurch gekennzeichnet, dass** das Parkmittel einen Außengewindeabschnitt (82) aufweist, der an der Unterseite des Deckels (10) nahe der Einfüllöffnung (18) angehängt ist.

7. Deckel nach einem der Ansprüche 1 bis 6, **dadurch gekennzeichnet, dass** das Druckentlastungsventil (38) einen über die Deckeloberseite überstehenden Stutzen (40) aufweist, auf den das zweite Verschlusselement (42) in zwei unterschiedlichen Positionen aufschraubbar ist.

8. Deckel nach Anspruch 7, **dadurch gekennzeichnet, dass** das zweite Verschlusselement ein annähernd zylindrisches Bauteil ist mit zwei Innengewindeabschnitten in den Endbereichen und einer Trennwand (44) zwischen den Innengewindeabschnitten, wobei die Wandung des zylindrischen Bauteils auf einer Seite der Trennwand (44) Öffnungen (48) aufweist.

9. Deckel nach einem der Ansprüche 1 bis 8, **dadurch gekennzeichnet, dass** er eine weitere Öffnung aufweist, die durch eine Kappe (50) aus Edelstahl verschließbar ist und die Kappe an der Unterseite einen Überfüllsensor hält.
